# EUROPEAN PATENT SPECIFICATION

(11) **EP 3 082 224 B1**
(45) Date of publication and mention of the grant of the patent: **13.02.2019**
(21) Application number: 16162763.3
(22) Date of filing: 30.03.2016
(51) Int. Cl.: H02K 1/24, H02K 15/02, H02K 19/10

(54) **SYSTEM AND METHOD FOR SUPPORTING LAMINATIONS OF SYNCHRONOUS RELUCTANCE MOTORS**
SYSTEM UND VERFAHREN ZUR UNTERSTÜTZUNG VON LAMINIERUNGEN VON SYNCHRONEN RELUKTANZMOTOREN
SYSTÈME ET PROCÉDÉ POUR SUPPORTER DES LAMELLES DE MOTEURS À RÉLUCTANCE SYNCHRONE

(30) Priority: 01.04.2015 US 201514676587
(43) Date of publication of application: 19.10.2016
(73) Proprietor: General Electric Company, Schenectady, NY 12345 (US)
(72) Inventor: ALEXANDER, James Pellegrino, Niskayuna, NY 12309 (US); GRACE, Kevin Michael, Niskayuna, NY 12309 (US); REDDY, Patel Bhageerath, Niskayuna, NY 12309 (US)
(74) Representative: Serjeants LLP

(56) References cited:
- EP-A2- 1 786 088
- WO-A2-2006/121225
- DE-A1-102014 201 740
- GB-A- 940 997
- JP-A- H10 271 779
- US-A- 5 893 205
- US-A- 6 005 318
- US-A1- 2003 107 288
- US-A1- 2006 061 227

## Description

### BACKGROUND

The subject matter disclosed herein relates to electric motors, and more specifically, to supporting laminations of synchronous reluctance motors.

Electric motors typically have a stationary stator with poles that generate a rotating magnetic field to drive poles of a rotor. The rotor rotates relative to the stator, thereby rotating a shaft coupled to the rotor. The stator may generate the rotating magnetic field from a supplied current, such as an alternating current. The rotor of a reluctance motor does not receive an electric current. Rather, the magnetic field of the stator induces a magnetic field on the poles of the rotor, generating torque via magnetic reluctance. A synchronous reluctance motor is an alternating current motor for which the rotation of the shaft is synchronized with the frequency of the alternating current. Channels of the rotor poles carry magnetic flux to generate the torque. Large connections between channels of each rotor pole increases leakage flux between the channels. Additionally, radial stresses during rotor operation at high speeds or with large rotor radii may reduce an airgap between the rotor and the stator when the rotor has small connections between channels of each rotor pole.

WO 2006/121225 discloses a rotor of a synchronous reluctance machine comprising:
- a first plate and a second plate,
- a first set of rotor poles, wherein each rotor pole of the first set of rotor poles comprises a first plurality of laminations axially stacked between the first plate and the second plate,
- each lamination of the first plurality of laminations comprises first channels configured to carry magnetic flux and a first plurality of passages spaced between the first channels,
- a first set of axial stiffeners,
- wherein each axial stiffener of the first set of axial stiffeners is disposed within a respective passage of the first plurality of passages,
- a first end of each axial stiffener of the first set of axial stiffeners is coupled to the first plate and a second end of each axial stiffener of the first set of axial stiffeners is coupled to the second plate.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the disclosed subject matter. Indeed, the disclosed subject matter may encompass a variety of forms that may be similar to or different from the embodiments set forth below.

In one embodiment, the present invention provides a synchronous reluctance machine according to claim 1. In another embodiment, the present invention provides a synchronous reluctance machine according to claim 8.

### BRIEF DESCRIPTION OF THE DRAWINGS

These and other features, aspects, and advantages of the present disclosed subject matter will become better understood when the following detailed description is read with reference to the accompanying drawings in which like characters represent like parts throughout the drawings, wherein:
FIG. 1 is a schematic diagram illustrating an embodiment of a synchronous reluctance machine, in accordance with aspects of the present disclosure;
FIG. 2 is a perspective view of an embodiment of a rotor of the synchronous reluctance machine of claim 1, in accordance with aspects of the present disclosure;
FIG. 3 is an axial cross-sectional view of an embodiment of a pole of the rotor having axial stiffeners, in accordance with aspects of the present disclosure; and
FIG. 4 is a perspective view of an embodiment of a rotor pole and portions of end plates of the rotor, in accordance with aspects of the present disclosure.

### DETAILED DESCRIPTION

One or more specific embodiments of the presently disclosed subject matter will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed subject matter, the articles "a," "an," "the," and "said" are intended to mean that there are one or more of the elements. The terms "comprising," "including," and "having" are intended to be inclusive and mean that there may be additional elements other than the listed elements.

Synchronous reluctance machines (e.g., motors) have a plurality of rotor poles that rotate relative to stator poles, thereby generating torque on a shaft coupled to the synchronous reluctance machine. Stator poles of a reluctance motor may induce magnetic fields on ferromagnetic (e.g., steel) rotor poles, and the changing magnetic field of the stator poles drives the rotation of the rotor poles. Each rotor pole may be formed from a stack of laminations. Channels of the laminations carry the magnetic fields of the rotor poles, and passages separate the channels of each lamination. Connections between channels may reduce the flux carried by each channel based at least in part on the thickness of the connections. In some embodiments, bridge sections connecting channels may enable the lamination to be formed of a unitary piece of material (e.g., sheet steel). A unitary lamination piece may reduce the time and costs associated with forming the lamination and assembling the rotor pole with other laminations by reducing the quantity of parts of each rotor pole. As described in detail below, axial stiffeners coupled to one or more channels of the laminations enable rotor laminations to have narrow bridge sections that reduce leakage flux from each channel, which may increase the power density and/or improve the power factor of the synchronous reluctance machine. For example, the axial stiffeners may enable a rotor with a given radius (e.g., approximately 100 mm) configured to operate at a first speed (e.g., 10,000 rpm) to operate at a higher second speed (e.g., 14,000 rpm), thereby increasing the power output of the synchronous reluctance machine. Additionally, or in the alternative, the axial stiffeners may enable a rotor with a first radius configured to operate at a given speed (e.g., 10,000 rpm) to operate with a greater second radius, thereby increasing the power output of the synchronous reluctance machine. The axial stiffeners provide radial support to the laminations, thereby reducing stresses on the laminations during operation and maintaining an air gap between the rotor and the stator.

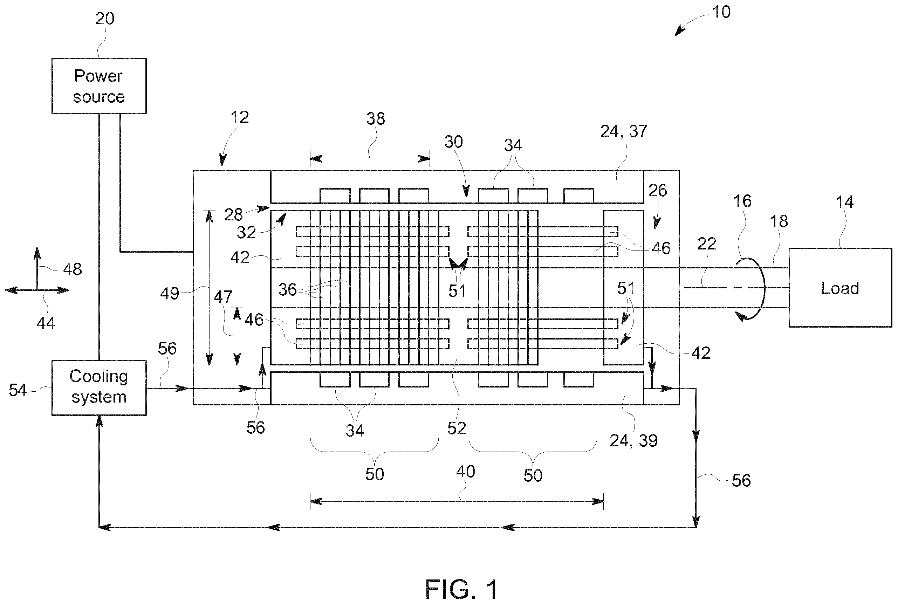

Turning to the drawings, FIG. 1 is a schematic diagram that illustrates an a rotational system 10 (e.g., rotary machinery such as turbomachinery) with a synchronous reluctance machine 12 (e.g., synchronous reluctance motor) according to the invention coupled to one or more loads 14. The synchronous reluctance machine 12 may include, but is not limited to a wind-driven motor or a hydro-driven motor. In the rotational system 10, the synchronous reluctance machine 12 provides a rotational output 16 to the one or more loads 14 via a shaft 18. The synchronous reluctance machine 12 receives power (e.g., electric power) from a power source 20 that may include, but is not limited to, an electric generator, a mains power source (e.g., three-phase, single-phase), a battery, or any combination thereof. The one or more loads 14 may include, but is not limited to, a vehicle or a stationary load. In some arrangments, the one or more loads 18 may include a propeller on an aircraft, one or more wheels of a vehicle, a compressor, a pump, a fan, any suitable device capable of being powered by the rotational output of the synchronous reluctance machine 12, or any combination thereof. The shaft 18 rotates along an axis 22.

The synchronous reluctance machine 12 includes a stator 24 and a rotor 26. The rotor 26 may be disposed within the stator 24, offset by an airgap 28 between an interior surface 30 of the stator 24 and an exterior surface 32 of the rotor 26. As may be appreciated, the interior surface 30 of the stator 24 may be cylindrical. Stator poles 34 receiving power from the power source 20 are configured to generate magnetic fields to drive the rotor 26 and shaft 18 about the axis 22. The stator poles 34 may be powered so that the generated magnetic fields rotate about the axis 22. In some arrangments, the stator poles 34 are axially spaced along the stator 24, opposite laminations 36 of the rotor 26. The stator poles 34 are circumferentially spaced about the rotor 24. While FIG. 1 illustrates a longitudinal view of the synchronous reluctance machine 12 with only two sets of stator poles 34 (i.e., a first set of stator poles 34 along a top section 37, and a second set of stator poles 34 along bottom section 39 of the stator 24), it may be appreciated that the stator 24 may have more than two sets of stator poles 34. For example, the stator 24 may have 2, 3, 4, 5, 6, 7, 8, 9, 10, 12, 16, 24, 36, or more sets of stator poles 34 circumferentially spaced about the axis 18. The magnetic fields of the stator poles 34 induce magnetic fields in channels of the laminations 36 to drive the rotor 26 and the shaft 18 about the axis 22. In some arrangements, the stator poles 34 extend axially a distance 38 opposite the stator 24, where the distance 38 is opposite laminations 36 of the rotor 26 or opposite a length 40 of the rotor 26. The length 40 of the rotor 26 may include portions of end plates 42 coupled to the shaft 18. In some arrangements, the length 40 of the rotor 26 is approximately 50 to 150 mm, 60 to 100 mm, or approximately 70 to 80 mm. The end plates 42 are configured to retain the laminations 36 in an axial direction 44, and the end plates 42 are configured to radially support axial stiffeners 46 as described in detail below. In some arrangements, the synchronous reluctance machine 12 does not utilize rare-earth magnets in the stator 24 or in the rotor 26, such as samarium-cobalt magnets, neodymium magnets, or any combination thereof. As described below, the small bridge sections between channels of the rotor poles may increase the power density of the synchronous reluctance machine 12 without utilizing rare-earth magnets.

The laminations 36 of the rotor 26 are stacked between the end plates 42 of the rotor 26. The laminations 36 reduce eddy currents from the induced magnetic field from the stator poles 34, thereby reducing inductive heating and energy loss of the rotor 26. In some arrangements, the rotor 26 has approximately 10, 20, 50, 100, 500, 1000, or more laminations 36 axially stacked between the end plates 42. The end plates 42 and the laminations 36 may extend approximately the same radial distance 47 from the shaft 18, thereby forming the exterior surface 32 offset from the interior surface 30 of the stator 24 by the airgap 28. The term "approximately" as utilized herein with respect to the radial distance 47 may include distances within 10 percent. That is, the laminations 36 may extend radially beyond the end plates 42 by up to 10 percent in some arrangements, and the end plates 42 may extend radially beyond the end plates 42 by 10 percent in other arrangements. In some arrangements, an outer diameter 49 of the rotor 26 is between approximately 150 to 300 mm, 175 to 250 mm, or 200 to 225 mm.

The material of the laminations 36 may include, but is not limited to laminated silicon steel, a carbonyl iron, or a ferrite ceramic, or any combination thereof. In some arrangments, each lamination 36 may be cut (e.g., mechanically cut, electically cut, laser cut) or stamped from a sheet, such as a laminated silicon steel sheet. Channels of each lamination 36 form rotor poles that carry the induced magnetic field. The rotor poles are circumferentially spaced about the axis 22. The quantity of rotor poles of the rotor 26 may be the same or less than the quantity of stator poles 34 of the stator 24. In some arrangements, each lamination 36 is substantially circular, and each lamination 36 has multiple (e.g., 2, 3, 4, 5, 6, 7, 8, 9, 10, 12, 16, 24, 36, or more) rotor poles. In some arrangements, each rotor pole is formed of separate stacks of laminations 36.

The axial stiffeners 46 couple to the end plates 42 of the rotor 26 and interface with channels of each lamination 36 disposed between the end plates 42. The axial stiffeners 46 are configured to provide radial support for the laminations 36 during operation of the synchronous reluctance machine 12. As the rotor 26 rotates about the axis 22, a centrifugal force in a radial direction 48 out from the axis 22 generates stress on components (i.e., laminations 36, axial stiffeners 46) of the rotor 26. The axial stiffeners 46 are configured to interface with the laminations 36 to enable the axial stiffeners 46 to carry the radial stress generated by the centrifugal force, thereby reducing deformation of the laminations 36 and maintaining the airgap 28 between the exterior surface 32 of the rotor 26 and the inner surface 30 of the stator 24. In the invention, each rotor pole has one or more axial stiffeners 46. Recessed portions (e.g., pockets) 51 of the end plates 42 may receive the axial stiffeners 46, such as via an interference or friction fit. Additionally, or in the alternative, the axial stiffeners 46 may be mounted (e.g., welded, bolted, brazed, adhered) to the end plates 42. In some arrangements, the axial stiffeners 46 may be integrally cast with one of the end plates 42. Moreover, the rotor 26 may have two or more sections 50 of laminations 36 separated by an end plate 52 (e.g., midplate), where opposite faces of the end plate 52 couple to axial stiffeners 46. In some arrangements, the axial stiffeners may be formed of a non-magnetic steel, such as A286 stainless steel. Additionally, or in the alternative, the materials of the axial stiffeners 46 may include, but are not limited to sheet steel, aluminum, copper, composites, resins, carbon fiber, or any combination thereof. As may be appreciated, the materials of the axial stiffeners 46 may be non-magnetic, thereby reducing the effect of the axial stiffeners on the magnetic field through the channels. It may be appreciated that some of the laminations 36 of the right section 50 of the rotor 26 of FIG. 1 are removed to show the axial stiffeners 46 that extend through the laminations 36, as shown in the left section 50. That is, each section 50 of the rotor 26 may be approximately the same length (i.e., distance 38), and each section 50 may have approximately the same quantity of laminations 36. Moreover, each section 50 may have separate axial stiffeners 46.

In some arrangements, a cooling system 54 is coupled to the synchronous reluctance machine 12. The cooling system 54 may direct a coolant flow 56 (e.g., air, carbon dioxide, nitrogen) to the stator 24 and/or to the rotor 26, which may utilize the coolant flow 56 to reduce the temperature of heat generating components. For example, resistance heating based on electric current flow and/or induction heating based on magnetic fields may generate heat in the stator poles 34, the rotor poles, or any combination thereof. In some arrangements, the cooling system 54 directs the coolant flow 56 to passages of the stator 24 and/or the rotor 26. The coolant flow 56 directed to the synchronous reluctance machine 12 may be directed from the cooling system 54 in an open or closed loop.

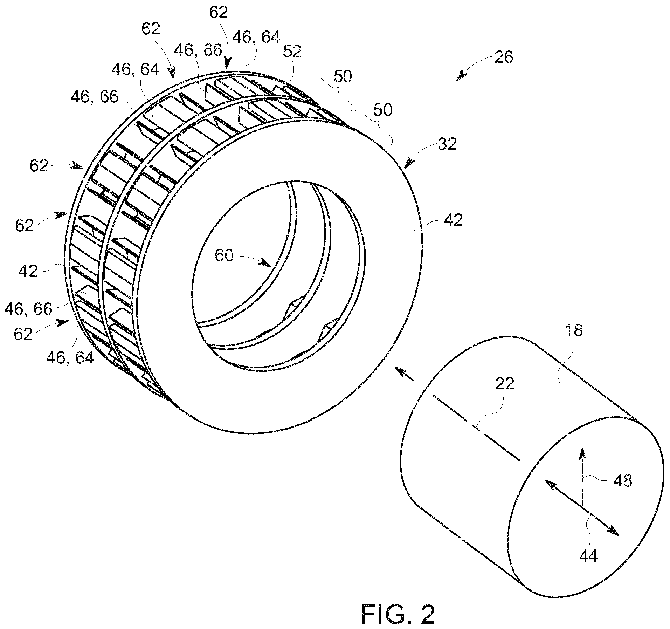

FIG. 2 is a perspective view of an arrangement of the rotor 26 of FIG. 1 that shows the axial stiffeners 46 without the laminations 36. The exterior surface 32 of the rotor 26 is configured to be disposed opposite the interior surface 30 of the stator 24, and the exterior surface 32 may be circular. An inner surface 60 of the rotor 26 couples to the shaft 18. The inner surface 60 may have a complementary geometry to the shaft 18, thereby facilitating mounting with the end plates 42, 52. For example, the inner surface 60 may be circular to couple with a substantially circular shaft 18, or the inner surface 60 may have one or more recesses (e.g., keyways) to accommodate ribs (e.g., keys) of the shaft 18.

In some arrangements, each rotor pole has one or more axial stiffeners 46. The rotor 26 of FIG. 2 has twelve sets 62 of axial stiffeners 46 to support twelve rotor poles circumferentially spaced about the rotor 26. As may be appreciated, other rotors 26 may have greater or lesser quantities of rotor poles and corresponding sets 62 of axial stiffeners 46. Each set 62 of axial stiffeners 46 includes a first stiffener 64 (i.e., outer stiffener) and a second stiffener 66 (i.e., inner stiffener). Moreover, each set 62 of axial stiffeners 46 may include first and second stiffeners 64, 66 for each section 50 of the rotor 26 disposed between end plates 42, 52. The first and second stiffeners 64, 66 may have different geometries, as discussed in detail below.

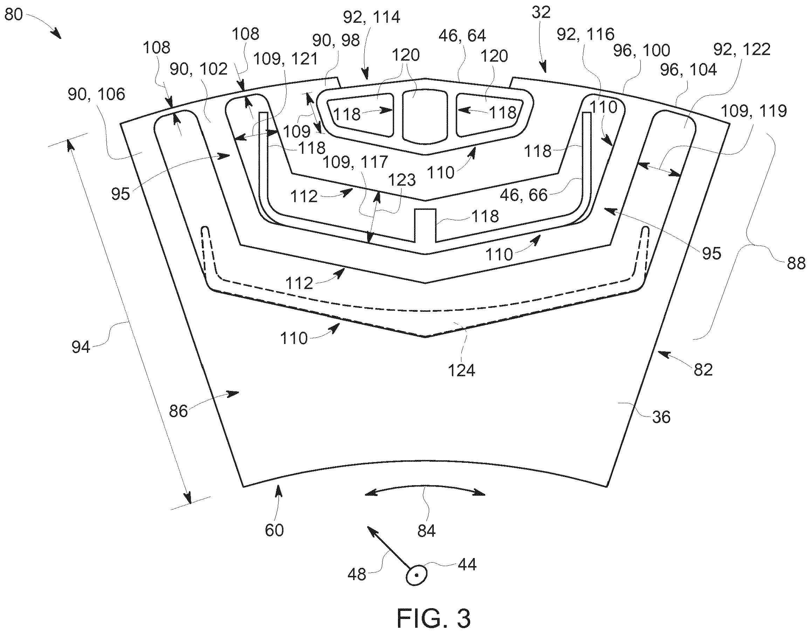

FIG. 3 is an axial cross-sectional view of an arrangement of a rotor pole 80 of the rotor 26 and axial stiffeners 46. While FIG. 3 illustrates a lamination 36 that forms a layer of a rotor pole 80, it may be appreciated that some laminations 36 may have multiple sections 82 that form respective layers of multiple rotor poles 80. For example, a circular lamination 36 may have ten sections 82 corresponding to ten rotor poles 80, where each section 82 (as shown in FIG. 3) extends approximately 36° in a circumferential direction 84. A body portion 86 of the lamination 36 forms the inner surface 60, which couples with the shaft 18. An outer portion 88 of the lamination 36 has channels 90 and passages 92. In some arrangements, the outer portion 88 is the outer 50 percent or more of the lamination 36 based on a width 94 (i.e., radial distance 47) of the lamination 36 in the radial direction 48.

The channels 90 of the lamination 36 carry the magnetic fields induced by the stator poles 34 of the stator 24, and the passages 92 separate the channels 90. The channels 90 may have radial portions 95 that extend towards the outer surface 32 of the lamination 36 in substantially the radial direction 48. Bridge sections 96 couple the channels 90 at ends of the radial portions 95 and enable the lamination 36 to be formed (e.g., cut, stamped) as a unitary piece such that each of the channels 90 is formed with the body 86. Additionally, the bridge sections 96 enable the channels 90 of the lamination 36 to be assembled (e.g., stacked) as one piece. Moreover, the bridge sections 96 support the channels 90 to maintain the separation via the passages 92. For example, a first channel 98 is supported by a first bridge section 100 coupled to a second channel 102, and the second channel 102 is supported by a second bridge section 104 coupled to a third channel 106. However, a thickness 108 of the bridge sections 96 affects the quantity of the magnetic field carried by each respective channel 90. That is, increasing the thickness 108 may decrease the magnetic field carried by the channels 90, thereby decreasing the power density of the synchronous reluctance machine 12. Likewise, decreasing the thickness 108 may increase the magnetic field carried by the channels 90, thereby increasing the power density of the synchronous reluctance machine 12.

The axial stiffeners 46 provide radial support to the channels 90 of the laminations 36. During operation of the rotor 26, centrifugal forces on the lamination 36 would generate radial stresses on the bridge sections 96 unless otherwise supported by the axial stiffeners 46 as described herein. Accordingly, radial stresses on the bridge sections 96 without axial stiffeners 46 may limit how narrow the bridge section 96 may be and/or may limit the rotational speed of the rotor 26 to maintain the airgap 28 between the outer surface 32 and the stator 24. The axial stiffeners 46 are configured to radially support the laminations 36 to enable the thickness 108 of the bridge sections 96 to be reduced and/or enable the rotational speed of the rotor 26 to be increased while maintaining the airgap 28. The axial stiffeners 46 are arranged within the rotor 26 to receive more radial stress from the centrifugal forces during operation than the bridge sections 96, and more radial stress than the channels 90. That is, the axial stiffeners 46 are arranged to receive non-zero radial stresses from the centrifugal forces during operation. For example, the axial stiffeners 46 may receive approximately 50, 75, 80, 90, or 95 percent or more of the radial stress on the rotor 26 during operation. The axial stiffeners 46 are disposed within passages 92 of the laminations 36. In some arrangements, the axial stiffeners 46 interface with interior faces 110 and/or exterior faces 112 of the channels 90. For example, the first stiffener 64 interfaces with an interior face 110 of a first passage 114, and the second stiffener 66 interfaces with an interior face 110 of a second passage 116. In some arrangements, the second stiffener 66 only interfaces with the interior face 110 of the second passage 116 and does not interface with the exterior face 112, thereby reducing leakage flux between the first and second channels 98, 102 through the second stiffener 46.

In some arrangements, each passage 92 has a substantially uniform width 109. Additionally, or in the alternative, the passage width 109 may vary among the passages 92. For example, a second width 117 of the second passage 116 may be different than (e.g., less than, greater than) a third width 119 of a third passage 122. Moreover, the passage width 109 may vary along a length of each passage 92. For example, a leg width 121 of the second passage 116 may be greater than a base width 123 of the second passage 116, or vice versa. The passage width 109 may be based at least in part on the magnetic field to be carried by each channel 90, the geometry of the axial stiffeners 46, the quantity of channels 90 and passages 92 of the lamination 36, and/or stress concentrations of the channels 90 during operation, among other factors.

The geometries of the axial stiffeners 46 are configured to provide radial support to the channels 90. A low cross-sectional moment of inertia of the axial stiffeners 46 facilitates the radial support of the channels 90 of the laminations 36 and increases the resistance of the axial stiffeners 46 to deformation (e.g., bending) along an axis perpendicular to the axis 22 through the shaft 18. For example, ribs 118 of the axial stiffeners 46 that extend in substantially the radial direction 48 may increase the radial support. According to the invention, the axial stiffeners 46 have hollow regions 120. In some arrangements, the hollow regions 120 and/or the passages 92 increase the convection potential to transfer heat among the components of the rotor 26, thereby reducing the likelihood of overheating a portion of the rotor 26. For example, the coolant flow 56 from the cooling system 54 may be directed to the hollow regions 120 and/or to the passages 92 of the rotor 26. As may be appreciated, the radial stresses of a rotating body (i.e.., rotor 26) increase with the radial distance from the axis of rotation and/or the rotational speed of the rotating body. Accordingly, the first stiffener 64 in the first passage 114 may be configured to resist greater radial stresses than the second stiffener 66 in the second passage 116. In some arrangements, the third channel 106 may be sufficiently supported in the radial direction 48 by the body 86 of the lamination 36 that a third passage 122 radially inside the first and second passages 114, 116 does not have an axial stiffener 46. However, other arrangements of the lamination 36 may have a third axial stiffener 124 disposed within the third passage 122, as illustrated with the dashed line. Moreover, while the arrangements discussed above with respect to FIG. 3 describe laminations 36 with three channels 90 (i.e.., channels 98, 102, 106), three passages 92 (i.e.., passages 114, 116, 122), and two axial stiffeners 46 (i.e.., first stiffener 64, second stiffener 66), it may be appreciated that laminations 36 having different quantities of channels 90 and passages 92 may be similarly supported in the radial direction 48 with one or more axial stiffeners 46.

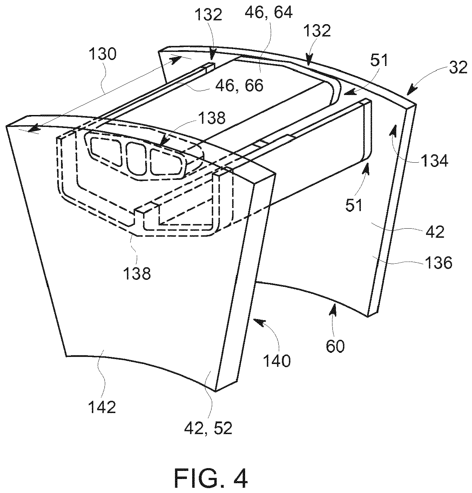

FIG. 4 is a perspective view of an arrangement of a portion of the rotor 26 with a set 62 of axial stiffeners 46 (i.e., the first stiffener 64 and the second stiffener 66) coupled between the end plates 42, where the end plates 42 are shown in phantom. As discussed above, one of the end plates 42 may be a mid plate 52 disposed between end plates 42, thereby subdividing the rotor 26 into sections 50. The cross-sections of the axial stiffeners 46 may be substantially constant along an axial length 130. In some arrangements, the axial stiffeners 46 may be formed by plastically forming (e.g., bending, folding) an axial stiffener blank formed from a sheet of the axial stiffener material. In some arrangements, one or more sheets of material are welded or brazed together to form the final shape of the axial stiffeners 46. Moreover, the axial stiffeners may be cast or molded from a base material. In some arrangements, one or more of the axial stiffeners 46 is formed via extrusion. For example, the first stiffener 64 may be an extruded steel or aluminum component. Additionally, or in the alternative, the one or more axial stiffeners 46 may be formed from one or more sheets of material (e.g., steel, stainless steel, aluminum).

A first axial end 132 of each axial stiffener 46 couples with an inner face 134 of a first end plate 136, and a second axial end 138 of each axial stiffener 46 couples with an opposing inner face 140 of a second end plate 142 (i.e., mid plate 52). Recessed portions (e.g., pockets) 51 of the inner face 134 and/or the opposing inner face 140 of the respective end plates 136, 142 may receive the axial stiffeners 46, such as via an interference or friction fit. That is, at least a part of the first axial end 132 and the second axial end 138 may be inserted within the end plates 42. Additionally, or in the alternative, the axial fasteners 46 may be retained within the recessed portions 52 via axial compression of the end plates 42. In some arrangements, the first axial end 132 and/or the second axial end 138 of each axial stiffener 46 is coupled to the respective end plate 136, 142 via a weld connection, a braze connection, or a mechanically fastened connection (e.g., bolt, threaded connection), or any combination thereof. The end plates 42 are configured to provide radial support to the axial stiffeners 46, which in turn provide radial support to the laminations 36. In some arrangements, the axial stiffeners 46 do not extend through the mid plate 52 to support multiple sections 50 of the rotor 26. That is, each axial stiffener 46 may support the laminations 36 of only one section 50 of the rotor 26.

Technical effects of the presently disclosed subject matter include increased power density of a synchronous reluctance machine without the use of rare-earth magnets. Additionally, the axial stiffeners enable a synchronous reluctance machine to maintain an airgap between the stator and the rotor despite increased centrifugal forces due to increased rotor radius and/or to increased rotor speeds. Moreover, unitary laminations of the rotor with multiple channels to carry the magnetic field for rotor poles may reduce the time and/or costs associated with manufacturing the laminations.

This written description uses examples to disclose the subject matter, including the best mode, and also to enable any person skilled in the art to practice the disclosed subject matter, including making and using any devices or systems and performing any incorporated methods. The patentable scope of the disclosed subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A synchronous reluctance machine (12), comprising:
a rotor (26) comprising:
a first plate (42) and a second plate (42);
a first set of rotor poles (80), wherein each rotor pole of the first set of rotor poles comprises a first plurality of laminations (36) axially stacked between the first plate (42) and the second plate (42), and each lamination of the first plurality of laminations comprises first channels (90) configured to carry magnetic flux and a first plurality of passages (92) spaced between the first channels (90) and separating said channels (90); and
a first set of axial stiffeners (46), wherein each axial stiffener (46) of the first set of axial stiffeners is disposed within a respective passage (92) of the first plurality of passages, a first end of each axial stiffener (46) of the first set of axial stiffeners being coupled to the first plate (42), and a second end of each axial stiffener (46) of the first set of axial stiffeners being coupled to the second plate (42);
wherein each rotor pole (80) of the first set of rotor poles comprises a first axial stiffener (64) of the first set of axial stiffeners disposed within a first passage (114) of the first plurality of passages, and each rotor pole (80) of the first set of rotor poles comprises a second axial stiffener (66) of the first set of axial stiffeners disposed within a second passage (116) of the first plurality of passages; and
wherein the first passage (114) of the first plurality of passages is disposed radially outside the second passage (116) of the first plurality of passages, and the first axial stiffener (64) comprises a hollow member.

2. A synchronous reluctance machine (12) according to claim 1, wherein each lamination (36) of the first plurality of laminations consists of a unitary section.

3. A synchronous reluctance machine (12) according to claim 1 or claim 2, wherein each lamination (36) of the first plurality of laminations comprises a bridge section (96) extending circumferentially between the first channels (90), wherein the bridge section and the first channels enclose each passage (92) of the first plurality of passages.

4. A synchronous reluctance machine (12) according to any preceding claim, wherein each first channel (90) comprises a first radial portion (95) extending in a radial direction, and each passage (92) of the first plurality of passages (92) comprises a second radial portion extending in the radial direction.

5. A synchronous reluctance machine (12) according to any preceding claim, wherein the first set of axial stiffeners comprise ribs (118) extending in a radial direction when disposed within the respective passages (92) of the first plurality of passages.

6. A synchronous reluctance machine (12) according to any preceding claim, wherein the first set of axial stiffeners (46) is formed from a non-magnetic steel.

7. A synchronous reluctance machine according to any preceding claim, wherein the rotor (26) comprises:
a third plate (52) disposed between the first and second plates (42, 42); and
a second set of rotor poles (80), wherein each rotor pole of the second set of rotor poles comprises a second plurality of laminations (36) axially stacked between the first plate (42) and the third plate (52), and each lamination (36) of the second plurality of laminations comprises second channels (90) configured to carry magnetic flux and a second plurality of passages (92) spaced between the second channels; and
a second set of axial stiffeners (46), wherein each axial stiffener of the second set of axial stiffeners is disposed within a respective passage (92) of the second plurality of passages, a first end of each axial stiffener of the second set of axial stiffeners being coupled to the first plate (42), and a second end of each axial stiffener of the second set being coupled to the third plate (52).

8. A synchronous reluctance machine (12), according to claim 1, wherein each lamination of the first plurality of laminations comprises a first channel (98) configured to carry magnetic flux, a second channel (102) configured to carry magnetic flux, and a body (86) forming the inner portion of the lamination, wherein the first channel (98) defines the first passage (114) between said first channel (98) and the outer periphery of the lamination, the first channel (98) and the second channel (102) define the second passage (116) therebetween, and the second channel (116) and the body (86) define a third passage (122) therebetween; and
wherein each rotor pole (80) of the first set of rotor poles optionally further comprises a third axial stiffener (124) disposed within the third passage (122), a first end of the third axial stiffener (124) being coupled to the first end plate (42), and a second end of the third axial stiffener (124) being coupled to the second end plate (42).

9. A synchronous reluctance machine (12) according to claim 8, wherein one or both of the first axial stiffener (64) and the second axial stiffener (66) comprise radial ribs (118), and the radial ribs are substantially aligned with an axis of the rotor (80).

10. A synchronous reluctance machine (12) according to claim 8 or claim 9, wherein one or both of the first axial stiffener (64) and the second axial stiffener (66) are formed from a non-magnetic steel.

11. A synchronous reluctance machine (12) according to any of claims 8 to 10, wherein a first width of the first passage (114) is different than a second width of the second passage (116).

12. A synchronous reluctance machine (12) according to any of claims 8 to 11, wherein the first axial stiffener (64) and the second axial stiffener (66) are configured to carry non-zero quantities of radial stresses on the rotor (80) during operation.

## Patentansprüche

1. Synchron-Relaktanzmaschine (12), die aufweist:
einen Rotor (26), der aufweist:
eine erste Platte (42) und eine zweite Platte (42) ;
einen ersten Satz von Rotorpolen (80), wobei jeder Rotorpol des ersten Satzes von Rotorpolen mehrere erste Lamellen (36) aufweist, die axial zwischen der ersten Platte (42) und der zweiten Platte (42) gestapelt sind, und jede Lamelle der mehreren ersten Lamellen erste Kanäle (90), die zum Führen eines Magnetflusses eingerichtet sind, und mehrere erste Durchgänge (92) aufweist, die zwischen den ersten Kanälen (90) im Abstand angeordnet sind und die Kanäle (90) trennen; und
einen ersten Satz axialer Versteifungen (46), wobei jede axiale Versteifung (46) des ersten Satzes axialer Versteifungen innerhalb eines jeweiligen Durchgangs (92) der mehreren ersten Durchgänge angeordnet ist, wobei ein erstes Ende jeder axialen Versteifung (46) des ersten Satzes axialer Versteifungen mit der ersten Platte (42) verbunden ist und ein zweites Ende jeder axialen Versteifung (46) des ersten Satzes axialer Versteifungen mit der zweiten Platte (42) verbunden ist;
wobei jeder Rotorpol (80) des ersten Satzes von Rotorpolen eine erste axiale Versteifung (64) des ersten Satzes axialer Versteifungen aufweist, die innerhalb eines ersten Durchgangs (114) der mehreren ersten Durchgänge angeordnet ist, und jeder Rotoropol (80) des ersten Satzes von Rotorpolen eine zweite axiale Versteifung (66) des ersten Satzes axialer Versteifungen aufweist, die innerhalb eines zweiten Durchgangs (116) der mehreren ersten Durchgänge angeordnet ist; und
wobei der erste Durchgang (114) der mehreren ersten Durchgänge radial außerhalb des zweiten Durchgangs (116) der mehreren ersten Durchgänge angeordnet ist und die erste axiale Versteifung (64) ein Hohlelement aufweist.

2. Synchron-Reluktanzmaschine (12) nach Anspruch 1, wobei jede Lamelle (46) der mehreren ersten Lamellen aus einem einheitlichen Abschnitt besteht.

3. Synchron-Reluktanzmaschine (12) nach Anspruch 1 oder Anspruch 2, wobei jede Lamelle (36) der mehreren ersten Lamellen einen Brückenabschnitt (96) aufweist, der sich in Umfangsrichtung zwischen den ersten Kanälen (90) erstreckt, wobei der Brückenabschnitt und die ersten Kanäle jeden Durchgang (92) der mehreren ersten Durchgänge umschließen.

4. Synchron-Reluktanzmaschine (12) nach einem beliebigen vorhergehenden Anspruch, wobei jeder erste Kanal (90) einen ersten radialen Abschnitt (95) aufweist, der sich in einer radialen Richtung erstreckt, und jeder Durchgang (92) der mehreren ersten Durchgänge (92) einen zweiten radialen Abschnitt aufweist, der sich in der radialen Richtung erstreckt.

5. Synchron-Reluktanzmaschine (12) nach einem beliebigen vorhergehenden Anspruch, wobei der erste Satz axialer Versteifungen Rippen (118) aufweist, die sich in einer radialen Richtung erstrecken, wenn sie innerhalb der jeweiligen Durchgänge (92) der mehreren ersten Durchgänge angeordnet sind.

6. Synchron-Reluktanzmaschine (12) nach einem beliebigen vorhergehenden Anspruch, wobei der erste Satz axialer Versteifungen (46) aus einem nichtmagnetischen Stahl gebildet ist.

7. Synchron-Reluktanzmaschine nach einem beliebigen vorhergehenden Anspruch, wobei der Rotor (26) aufweist:
eine dritte Platte (52), die zwischen der ersten und der zweiten Platte (42, 42) angeordnet ist; und
einen zweiten Satz von Rotorpolen (80), wobei jeder Rotorpol des zweiten Satzes von Rotorpolen mehrere zweite Lamellen (36) aufweist, die axial zwischen der ersten Platte (42) und der dritten Platte (52) gestapelt sind, und jede Lamelle (36) der mehreren zweiten Lamellen zweite Kanäle (90), die zum Führen eines Magnetflusses eingerichtet sind, und mehrere zweite Durchgänge (92) aufweist, die im Abstand zwischen den zweiten Kanälen angeordnet sind; und
einen zweiten Satz axialer Versteifungen (46), wobei jede axiale Versteifung des zweiten Satzes axialer Versteifungen innerhalb eines jeweiligen Durchgangs (92) der mehreren zweiten Durchgänge angeordnet ist, wobei ein erstes Ende jeder axialen Versteifung des zweiten Satzes axialer Versteifungen mit der ersten Platte (42) verbunden ist und ein zweites Ende jeder axialen Versteifung des zweiten Satzes mit der dritten Platte (52) verbunden ist.

8. Synchron-Reluktanzmaschine (12) nach Anspruch 1, wobei jede Lamelle der mehreren ersten Lamellen einen ersten Kanal (98), der zum Führen eines Magnetflusses eingerichtet ist, einen zweiten Kanal (102), der zum Führen eines Magnetflusses eingerichtet ist, und einen Körper (86) aufweist, der den inneren Abschnitt der Lamelle bildet, wobei der erste Kanal (98) den ersten Durchgang (114) zwischen dem ersten Kanal (98) und dem Außenumfang der Lamelle definiert, der erste Kanal (98) und der zweite Kanal (102) den zweiten Durchgang (116) dazwischen definieren und der zweiten Kanal (116) und der Körper (86) einen dritten Durchgang (122) dazwischen definieren; und
wobei jeder Rotorpol (80) des ersten Satzes von Rotorpolen optional ferner eine dritte axiale Versteifung (124) aufweist, die innerhalb des dritten Durchgangs (122) angeordnet ist, wobei ein erstes Ende der dritten axialen Versteifung (124) mit der ersten Endplatte (42) verbunden ist und ein zweites Ende der dritten axialen Versteifung (124) mit der zweiten Endplatte (42) verbunden ist.

9. Synchron-Reluktanzmaschine (12) nach Anspruch 8, wobei eine oder beide von der ersten axialen Versteifung (64) und der zweiten axialen Versteifung (66) radiale Rippen (118) aufweist/aufweisen und die radialen Rippen mit einer Achse des Rotors (80) im Wesentlichen ausgerichtet sind.

10. Synchron-Reluktanzmaschine (12) nach Anspruch 8 oder Anspruch 9, wobei eine oder beide von der ersten axialen Versteifung (64) und der zweiten axialen Versteifung (66) aus einem nichtmagnetischen Stahl ausgebildet ist/sind.

11. Synchron-Reluktanzmaschine (12) nach einem beliebigen der Ansprüche 8 bis 10, wobei eine erste Breite des ersten Durchgangs (114) sich von einer zweiten Breite des zweiten Durchgangs (116) unterscheidet.

12. Synchron-Reluktanzmaschine (12) nach einem beliebigen der Ansprüche 8 bis 11, wobei die erste axiale Versteifung (64) und die zweite axiale Versteifung (66) eingerichtet sind, um während eines Betriebs von null verschiedene Größen von radialen Belastungen des Rotors (80) aufzunehmen.

## Revendications

1. Machine à réluctance synchrone (12) comprenant :
un rotor (26) comprenant :
une première plaque (42) et une deuxième plaque (42) ;
un premier ensemble de pôles de rotor (80), dans lequel chaque pôle de rotor du premier ensemble de pôles de rotor comprend une première pluralité de tôles (36) empilées axialement entre la première plaque (42) et la deuxième plaque (42), et chaque tôle de la première pluralité de tôles comprend des premiers canaux (90) configurés pour acheminer un flux magnétique et une première pluralité de passages (92) espacés entre les premiers canaux (90) et séparant lesdits canaux (90) ; et
un premier ensemble de renforts axiaux (46), dans lequel chaque renfort axial (46) du premier ensemble de renforts axiaux est placé dans un passage respectif (92) de la première pluralité de passages, une première extrémité de chaque renfort axial (46) du premier ensemble de renforts axiaux étant accouplée à la première plaque (42), et une deuxième extrémité de chaque renfort axial (46) du premier ensemble de renforts axiaux étant accouplée à la deuxième plaque (42) ;
dans laquelle chaque pôle de rotor (80) du premier ensemble de pôles de rotor comprend un premier renfort axial (64) du premier ensemble de renforts axiaux placé dans un premier passage (114) de la première pluralité de passages, et chaque pôle de rotor (80) du premier ensemble de pôles de rotor comprend un deuxième renfort axial (66) du premier ensemble de renforts axiaux placé dans un deuxième passage (116) de la première pluralité de passages ; et
dans laquelle le premier passage (114) de la première pluralité de passages est disposé radialement à l'extérieur du deuxième passage (116) de la première pluralité de passages, et le premier renfort axial (64) comprend un élément creux.

2. Machine à réluctance synchrone (12) selon la revendication 1, dans laquelle chaque tôle (36) de la première pluralité de tôles consiste en une section unitaire.

3. Machine à réluctance synchrone (12) selon la revendication 1 ou 2, dans laquelle chaque tôle (36) de la première pluralité de tôles comprend une section de pont (96) qui s'étend de manière circonférentielle entre les premiers canaux (90), la section de pont et les premiers canaux renfermant chaque passage (92) de la première pluralité de passages.

4. Machine à réluctance synchrone (12) selon l'une quelconque des revendications précédentes, dans laquelle chaque premier canal (90) comprend une première partie radiale (95) qui s'étend dans une direction radiale, et chaque passage (92) de la première pluralité de passages (92) comprend une deuxième partie radiale qui s'étend dans la direction radiale.

5. Machine à réluctance synchrone (12) selon l'une quelconque des revendications précédentes, dans laquelle le premier ensemble de renforts axiaux comprend des nervures (118) qui s'étendent dans une direction radiale lorsqu'elles sont placées dans les passages respectifs (92) de la première pluralité de passages.

6. Machine à réluctance synchrone (12) selon l'une quelconque des revendications précédentes, dans laquelle le premier ensemble de renforts axiaux (46) est formé à partir d'un acier non magnétique.

7. Machine à réluctance synchrone selon l'une quelconque des revendications précédentes, dans laquelle le rotor (26) comprend :
une troisième plaque (52) placée entre les première et deuxième plaques (42, 42) ; et
un deuxième ensemble de pôles de rotor (80), chaque pôle de rotor du deuxième ensemble de pôles de rotor comprenant une deuxième pluralité de tôles (36) empilées axialement entre la première plaque (42) et la troisième plaque (52), et chaque tôle (36) de la deuxième pluralité de tôles comprenant des deuxièmes canaux (90) configurés pour acheminer un flux magnétique et une deuxième pluralité de passages (92) espacés entre les deuxièmes canaux ; et
un deuxième ensemble de renforts axiaux (46), dans lequel chaque renfort axial du deuxième ensemble de renforts axiaux est placé dans un passage respectif (92) de la deuxième pluralité de passages, une première extrémité de chaque renfort axial du deuxième ensemble de renforts axiaux étant accouplée à la première plaque (42), et une deuxième extrémité de chaque renfort axial du deuxième ensemble de renforts axiaux étant accouplée à la troisième plaque (52).

8. Machine à réluctance synchrone (12) selon la revendication 1, dans laquelle chaque tôle de la première pluralité de tôles comprend un premier canal (98) configuré pour acheminer un flux magnétique, un deuxième canal (102) configuré pour acheminer un flux magnétique, et un corps (86) qui forme la partie intérieure de la tôle, dans laquelle le premier canal (98) définit le premier passage (114) entre ledit premier canal (98) et la périphérie extérieure de la tôle, le premier canal (98) et le deuxième canal (102) définissent le deuxième passage (116) entre eux, et le deuxième canal (116) et le corps (86) définissent un troisième passage (122) entre eux ; et
dans laquelle chaque pôle de rotor (80) du premier ensemble de pôles de rotor comprend en outre en option un troisième renfort axial (124) placé dans le troisième passage (122), une première extrémité du troisième renfort axial (124) étant accouplée à la première plaque d'extrémité (42), et une deuxième extrémité du troisième renfort axial (124) étant accouplée à la deuxième plaque d'extrémité (42).

9. Machine à réluctance synchrone (12) selon la revendication 8, dans laquelle un des premier (64) et deuxième (66) renforts axiaux, ou les deux, comprend des nervures radiales (118), et les nervures radiales sont substantiellement alignées avec un axe du rotor (80).

10. Machine à réluctance synchrone (12) selon la revendication 8 ou 9, dans laquelle un des premier (64) et deuxième (66) renforts axiaux, ou les deux, est formé à partir d'un acier non magnétique.

11. Machine à réluctance synchrone (12) selon l'une quelconque des revendications 8 à 10, dans laquelle une première largeur du premier passage (114) est différente d'une deuxième largeur du deuxième passage (116).

12. Machine à réluctance synchrone (12) selon l'une quelconque des revendications 8 à 11, dans laquelle le premier renfort axial (64) et le deuxième renfort axial (66) sont configurés pour supporter des quantités non nulles d'efforts radiaux exercés sur le rotor (80) pendant le fonctionnement.
